# EUROPEAN PATENT APPLICATION

(11) **EP 4 563 524 A1**
(43) Date of publication of application: **04.06.2025**
(21) Application number: 23845755.0
(22) Date of filing: 04.07.2023
(51) Int. Cl.: C01B 3/06, F24S 20/20

(54) **METHOD FOR PRODUCING HYDROGEN BY DISSOCIATING WATER THROUGH THERMOCHEMICAL REACTIONS AND DEVICE FOR CARRYING OUT SAME**

(30) Priority: 26.07.2022 ES 202230683
(71) Applicant: Universidad Politécnica De Madrid, 28040 Madrid (ES)
(72) Inventor: RIVERA DE MENA, Antonio, 28040 Madrid (ES); GAROZ GÓMEZ, David, 28040 Madrid (ES); PEÑA RODRÍGUEZ, Ovidio, 28040 Madrid (ES)
(74) Representative: Sahuquillo Huerta, Jesús
(86) International application number: PCT/ES2023/070427
(87) International publication number: WO 2024/023379

(57) **Abstract**

The present invention relates to a method and device for producing hydrogen by dissociating the water molecule through thermochemical reactions, using a small amount of active material. The thermochemical reactions are induced by solar energy with a moderate concentration of up to 50 suns, which can be achieved through linear or parabolic concentrators.

## Description

### TECHNICAL FIELD OF THE ART

The present invention relates to a method and device for producing hydrogen by dissociating the water molecule through thermochemical reactions, using a small amount of active material. Thermochemical reactions are induced by solar energy with a moderate concentration, which can be achieved by several methods, with linear concentrators being of special relevance, due to their low cost and great development.

### BACKGROUND OF THE INVENTION

Green hydrogen is a priority goal in today's society to meet sustainability targets. It is anticipated that not only will hydrogen replace natural gas, but it will be the most important energy vector in the near future, with application in a wide range of areas: industry, transport, and domestic activities (Turner, J. et al. Renewable hydrogen production. International Journal of Energy Research 32, 379-407, 2008). There are several methods to produce green hydrogen from renewable energy. The use of solar-powered electrolysers is the most common method, due to the degree of maturation of the technologies involved. However, the yield from the primary source (sun) to hydrogen passing through the photovoltaic production of electricity, is very low due to the losses incurred during the double transformation. The procedure based on solar thermal energy to perform the dissociation of water through thermochemical reactions is postulated as more efficient than the photovoltaic process combined with electrolysis or other procedures such as photolysis (Perkins, C. & Weimer, A. W. Solar-thermal production of renewable hydrogen. AIChE Journal 55, 286-293, 2009). The thermochemical process to perform water dissociation consists of two steps: (i) first, the reactive material is heated to a moderate temperature, between 900°C and 1300°C, to induce the reduction step, releasing oxygen in an endothermic reaction; (ii) subsequently, the reactive material in contact with water gives rise to the oxidation half-reaction, releasing hydrogen in an exothermic reaction. This two-step process has been widely studied, and a large number of reactive materials that can reach reduction temperatures using concentrated solar energy are currently known (Abanades, S., Charvin, P., Flamant, G. & Neveu, P. Screening of water-splitting thermochemical cycles potentially attractive for hydrogen production by concentrated solar energy. Energy 31, 2805-2822, 2006). It is worth mentioning the most relevant studies where the efficiency of the thermochemical process using concentrated solar energy is demonstrated (Chueh, W. C. et al. High-Flux Solar-Driven Thermochemical Dissociation of CO2 and H2O Using Nonstoichiometric Ceria. Science 330, 1797-1801 (2010). Muhich, C. L. et al. Efficient Generation of H2 by Splitting Water with an Isothermal Redox Cycle. Science 341, 540-542, 2013). This methodology has been performed experimentally with different configurations, all of them based on high concentration thermo-solar systems (> 200 suns), such as the central tower system with heliostats with powers of more than 2MW (Muhich, C. L. et al. A review and perspective of efficient hydrogen generation via solar thermal water splitting. WIREs Energy and Environment 5, 261-287, 2016). The reactive material is presented as a porous monolith or in the form of particles that upon receiving the concentrated solar radiation reach the reduction temperature and release oxygen in a step of the order of minutes. Subsequently the active material is displaced or hidden from the solar source where it is cooled and oxidised with water. There are several patented inventions with the aim of producing hydrogen from the solar resource using thermochemical cycles. Of note are inventions WO2008113944A2 and CN112323092A where the reactive material is brought to a gaseous state during reduction, and subsequently solidifies upon oxidation. Other inventions use particles of the reactive material, which circulate through different fluid beds to perform the oxidation reduction cycles in their movement through the reactor (US20120237440A1). Or the particles are stored in tanks where they are heated and reduced by solar energy, to later pass water through the same tanks, where the reduction and obtaining of hydrogen is carried out (EP11003735A, US9399575B2). Porous monolith systems are based on solar reactors such as Goel's invention (WO2013021397) that are used in a central tower thermo-solar system.

### DESCRIPTION OF THE INVENTION

The methods proposed for the production of renewable hydrogen from concentrated solar energy, using thermochemical cycles, present the following problems:
1. The use of massive active material (disposed in different ways) requires very high concentration factors to reach the temperature required to induce the reduction half-reaction, which requires the use of sophisticated and expensive systems, such as a heliostat field.
2. The use of active material in massive blocks gives rise to diffusion-limited gas transport phenomena, as well as retrapping of molecules and recombination of hydrogen and oxygen, which gives rise to a significant decrease in performance.
3. Inescapably, heat loss occurs from the active material towards the walls of the containing reactor, which results in a significant decrease in performance.
4. The oxidation half-reaction is generally induced over a period of the order of minutes, with the active material not exposed to solar radiation and in the presence of water, which results in cooling of the active material. The reduction half-reaction of the subsequent cycle requires recovering the optimal energy for such a process. During the reheating of the active material, a significant loss in performance occurs, since the energy that should be used to induce the reduction of the active material is used in its heating.
5. The use of massive active material results in a lack of homogeneity throughout the volume of the material, in which temperature and concentration gradients appear with negative consequences for the performance of the system.

The present invention resolves all the above-described problems, maximising the yield in the conversion of solar energy to chemical energy (in the form of hydrogen), which approaches the theoretical limit. The methodology to resolve the problems is based on the following points:
1. The active material is disposed in the form of a thin layer and is kept at approximately the optimum operating temperature constantly. Thus, the optimum point of reduction (starting from stoichiometric material) can be reached in a time of the order of seconds.
2. An alternative to the thin layer is the use of powder composed of micronometric grains inside an appropriate container.
3. Conventional gas pumping systems are used, with residence times of the order of one second, less than the time necessary to reach the optimal degree of reduction of the active material. In this way, the oxygen released in a vacuum during the reduction half-reaction can be evacuated before the admission of steam to induce the oxidation half-reaction. Likewise, the hydrogen released in this half-reaction can be evacuated before the next reduction-oxidation cycle is started. This reciprocating pumping of both gases naturally minimises recombination losses.
4. This configuration makes it unnecessary to use inert atmospheres during the reduction half-reaction.
5. The disposal of the active material in the form of a thin layer or micrometric powder favours the transport of gases and minimises the retrapping of molecules, which prevents losses in performance of the system.
6. The proposed system is based on a heat trap that absorbs the solar spectrum in the active layer, either in the active material itself, in inclusions in the form of nanoparticles or in an adjacent layer, and confines the black body radiation emitted by the hot active material by infrared reflectors. The confined infrared radiation is absorbed in a layer designed for such purpose close to the active material and thus the absorbed energy is transmitted by conduction to the active layer. By means of the heat trap, heat losses are minimised, which avoids losses in performance.
7. The disposal of the active material in a thin layer or as micrometric powder and the use of an efficient heat trap allow minimising the volume of material to be heated up to the optimal temperature for the reduction half-reaction. In this way, a moderate concentration factor of less than 50 suns is sufficient. These factors can be achieved with low-cost concentrators, which increases the economic attractiveness of the method.
8. The use of linear concentrators has several advantages (although it is not the only solution), because its geometry is suitable for the assembly of tubes containing the active material. The proposed hydrogen generation system can be easily scaled by joining several individual systems to cover the entire available land area. This is particularly easy by making use of linear concentrators. The ease of scaling allows adapting the system to any terrain, reducing installation costs and providing on-site hydrogen, avoiding transport from a centralised production plant to the end user.
9. A small fraction of the concentrated solar energy is used to generate steam, which is admitted in the form of pulses during the oxidation half-cycle. The small energy loss required to generate the steam is highly compensated by the higher reaction rate of the steam oxidation half-reaction compared to the reaction rate obtained using liquid water and the decrease in yield caused by the cooling of the active material.
10. The oxidation half-reaction occurs very quickly, as it starts at the optimum reduction temperature and at the end of the oxidation process the temperature has fallen slightly due to contact with the cooler steam. The heat trap, the presence of concentrated solar radiation during oxidation and the fact that the oxidation reactions are exothermic, means that the temperature of the active layer does not decrease much during the oxidation half-reaction, in turn avoiding a decrease in performance.
11. The hydrogen released during the oxidation half-reaction is dragged out of the tube by the remaining steam. Subsequently, the steam condenses, so the hydrogen can be easily extracted.

Therefore, in a first aspect the present invention relates to a method of producing hydrogen by dissociating water through thermochemical reduction-oxidation (redox) reactions characterised in that:
a. an active material capable of sustaining redox cycles without degrading is used, with hydrogen production in each oxidation half-cycle, where said material must be partially reduced in the reduction half-cycle and completely reoxidised in the oxidation half-cycle induced by interaction with steam;
b. the production of hydrogen is carried out continuously in two-step cycles, the first is heating of the active material in a vacuum to partially reduce it, which results in the emission of oxygen, and the second step is admitting a steam pulse to oxidise the active material releasing hydrogen;
c. the method is performed in a solar concentration system comprising a collector that focuses solar energy, a receiver where the system is located for the use of concentrated solar energy, and an absorber that transforms solar energy into heat;
d. the active material is kept at high temperature during the reduction and oxidation steps, wherein said material may act as an absorber or be bonded to the absorber to maximise the energy it receives from the absorber by thermal conduction;
e. the energy emitted in the form of infrared radiation within the receiver is confined to the system by a heat trap to minimise performance loss, wherein preferably said heat trap is based on a layer on the receiver capable of reflecting the infrared radiation emitted by the hot active material, and wherein the infrared radiation confined by the heat trap is absorbed in an area close to the active material to facilitate heating of the active material by thermal conduction;
f. a process control system controls the steps of each cycle by regulating the time of each step by opening and closing the steam inlet and separating the gases evacuated in each step;
g. the oxygen generated in the reduction reaction and the hydrogen generated in the oxidation reaction are evacuated from the reactor separately and without mixing before the entry of steam from the next redox cycle;
h. the solar concentrator system comprises a vaporiser, which is preferably part of the receiver and is powered by a small fraction of the solar energy collected by the collector.

Preferably, the solar concentrator is a linear concentrator with a moderate concentration of up to 50 suns such as a parabolic trough concentrator or a concentrator based on Fresnel lenses, without excluding other linear concentrators.

Preferably, the solar concentrator is a parabolic dish concentrator with a moderate-high concentration greater than 50 suns.

Regarding the active material, there are many suitable materials to support these redox cycles. With appropriate treatment, it can be achieved that these materials do not degrade with the passage of the redox cycles. A good number of metal oxides stand out, such as ceria, ferrites, zinc oxide, tin oxide, etc. or newer materials based on perovskites.

Preferably, the active material is disposed in a thin layer adhered to a substrate inside the solar receiver. If the active material does not act as an absorber (of the solar spectrum) the substrate is modified in the adhesion area of the active material to act as an absorber. In addition, the substrate has a layer capable of absorbing the infrared radiation emitted by the hot active material.

Preferably, the active material is disposed in micrometric powder form within fine tubes within the solar receiver. If the active material in powder form does not act as an absorber (of the solar spectrum), the material will be doped, inclusions of absorber material will be added or the tubes will be covered with a layer capable of absorbing the solar spectrum. In addition, the tubes shall be covered with a layer capable of absorbing the infrared radiation emitted by the hot active material or inclusions capable of absorbing such radiation shall be added.

Preferably, the active material is disposed inside a porous container capable of retaining the active material in the form of a micrometric powder. Thus, the transfer of gases occurs through the porous material and not forced through the tubes. If the active material in powder form does not act as an absorber (of the solar spectrum), the material will be doped, inclusions of absorber material will be added or the container will be covered with a layer capable of absorbing the solar spectrum. In addition, the walls of the container will be covered with a layer capable of absorbing the infrared radiation emitted by the hot active material or inclusions capable of absorbing such radiation will be added.

Another aspect of the invention relates to a device for obtaining hydrogen by the method as described above comprising:
a. a solar concentrator composed of a collector (110), a transparent receiver (101) and an absorber;
b. a vaporiser (102) with a steam inlet towards the receiver (103), wherein said vaporiser is fed with a small fraction of the solar energy collected by the collector;
c. an active material (104) disposed within the receiver (101) that acts as an absorber or is in thermal contact with the absorber;
d. a heat trap that confines heat within the receiver where the receiver is coated by a layer (109) capable of reflecting infrared radiation emitted by the hot active material;
e. a gas outlet (106) controlled by the process control system;
f. a two-way gas evacuation system formed by a gas pump (111) to evacuate the stream of hydrogen and water produced inside the receiver and another gas pump (112) to evacuate the stream of oxygen produced in the receiver;
g. an automatic process control system configured to synchronise the opening and closing of valves for the correct admission of the steam pulses of (102) and the correct evacuation of hydrogen and oxygen by means of the pumps (111) and (112).

Preferably, the solar concentrator is a linear concentrator (100) with a moderate concentration of up to 50 suns such as the parabolic trough or Fresnel collector (110), without excluding other linear concentrators, and where the active material is disposed either as a thin layer, or as a micrometric powder in fine tubes, or inside a porous container, as described above.

Preferably, the solar concentrator is a parabolic solar concentrator (200) with a moderate-high concentration greater than 50 suns such as the parabolic dish collector (210), without excluding other parabolic concentrators, and where the active material is disposed either as a thin layer, or as a micrometric powder in fine tubes, or inside a porous container, as described above.

### PREFERRED EMBODIMENT 1

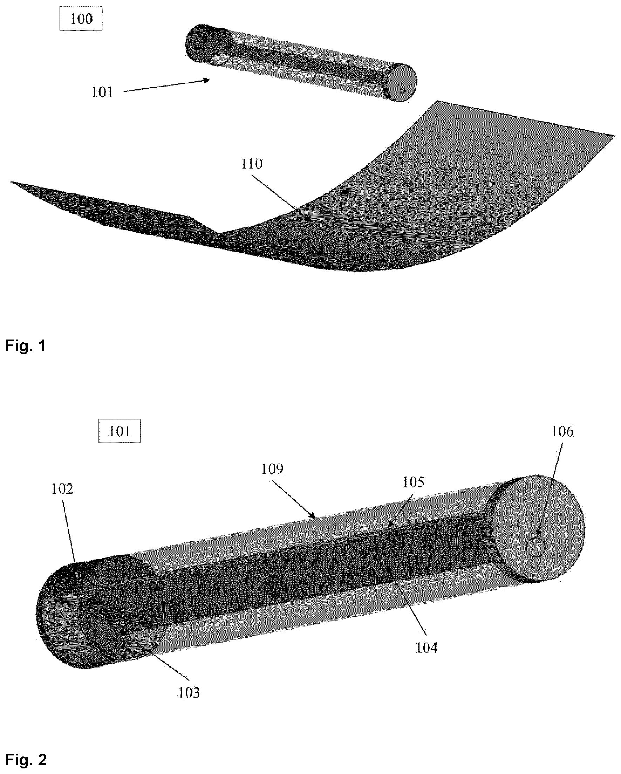

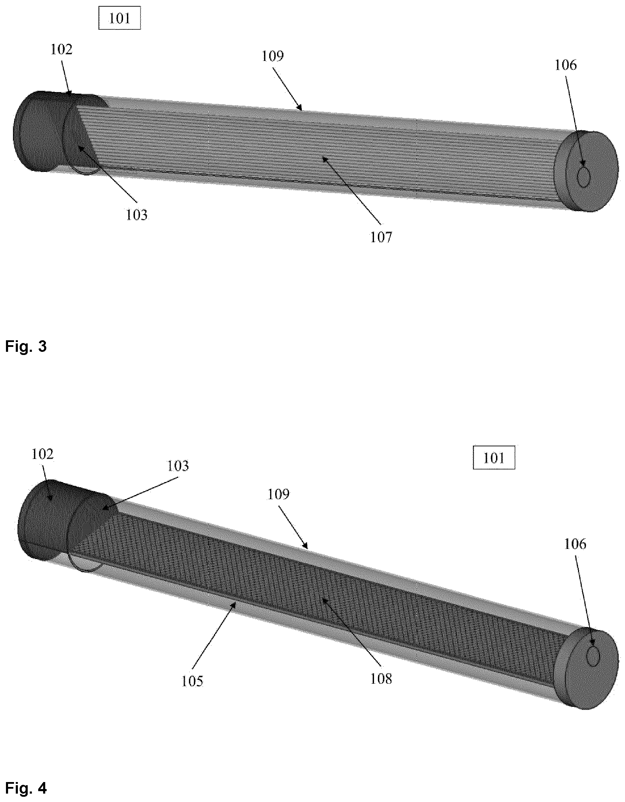

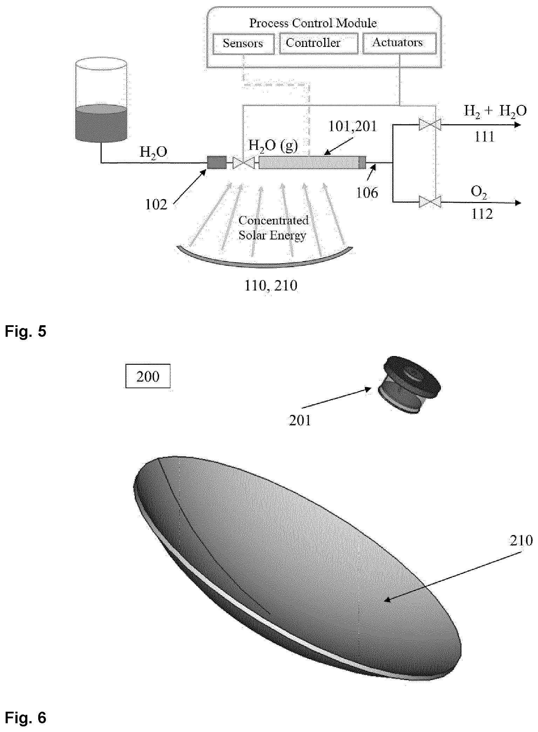

A preferred embodiment of the present invention of a device for hydrogen production by means of thermochemical water dissociation cycles is described below with the help of the attached figures.
1. The central point of this embodiment of the invention is the receiver (101) and its components for steam generation and admission, radiation collection, heat trap, induction of thermochemical reactions and gas evacuation. Fig. 1 schematically shows a receiver (101) operating with a linear collector (110). The collector may be a parabolic trough or Fresnel collector, not excluding any other linear collectors. Fig. 2 shows in detail the receiver (101), the absorber is a thin layer of active material (104) disposed on a substrate (105) axially, the gas evacuation system (106), the steam generator (102), and the steam pulse admission system (103).
2. The tubular receiver (101) is delimited by a tube of transparent material in the solar spectrum (109), and the tube (109) is coated with material capable of reflecting the infrared radiation produced by the hot absorbing material thus creating a heat trap.
3. The absorber is located on the axis of the tube, which corresponds to the position of maximum solar concentration. The absorber consists of a substrate (105) whereon the active material (104) capable of supporting the thermochemical reactions is deposited. In the event that the active material (104) is not a perfect absorber of the solar spectrum, inclusions in the form of nanometric particles (for example, plasmonic particles) can be incorporated or an adjacent layer of an absorber material can be added for this purpose. The substrate (105), apart from acting as a mechanical support and heat reservoir, consists of an absorbing layer for infrared radiation. In this way the energy stored in the heat trap ends up being absorbed near the active layer whereto it is transmitted by conduction.
4. The device consists of a steam generator (102) and a system for admitting pulses of steam in a controlled way in order to activate the oxidation half-reaction. The steam generator makes use of a small fraction of the concentrated power provided by the linear concentrator. The steam generator is connected to the tube by means of quick-opening valves that allow providing a pulse of controlled duration and pressure (103).
5. The gases are expelled from the gas outlet (106) at the end opposite to that of the steam generator (103) (Fig. 4). Figure 5 shows the diagram of separation of gases by pulses. The generated oxygen is expelled by a valve to a pump system that allows the oxygen generated in the reduction half-reaction to be evacuated by maintaining the tube in vacuum (112). The hydrogen, together with the excess steam from the oxidation half-reaction, is expelled by connecting the tube to a system of pumps that allow the mixture of steam and hydrogen to be evacuated (111). Expansion and cooling of the mixture results in condensation of the steam. Thus, the hydrogen is finally entrained mixed with water by conventional fluid pumps to a suitable reservoir that allows easy separation of liquid water and hydrogen gas.
6. An automatic process control system allows the opening and closing of the valves to be synchronised for the correct admission of the steam pulses and the correct expulsion of hydrogen and oxygen (Fig. 5), minimising their mixing and therefore the related losses.

### EMBODIMENT 2.

A preferred embodiment of the present invention of a device for hydrogen production by means of thermochemical water dissociation cycles is described below with the help of the attached figures.
1. The central point of this embodiment of the invention is the receiver (101) and its components for steam generation and admission, radiation collection, heat trap, induction of thermochemical reactions and gas evacuation. Fig. 1 schematically shows a receiver (101) operating with a linear collector (110). The collector may be a parabolic trough or Fresnel collector, not excluding any other linear collectors. Fig. 3 shows in detail the tubular receiver (101), the absorber in the form of a micrometric powder inside the transparent tubes (107), the gas evacuation system (106), the steam generator (102) and the steam pulse admission system (103).
2. The tubular receiver (101) is delimited by a tube of transparent material in the solar spectrum (109). The tube (109) is coated with material capable of reflecting the infrared radiation produced by the hot absorbing material thus creating a heat trap.
3. The absorber is located on the axis of the tube, which corresponds to the position of maximum solar concentration. The absorber consists of thin transparent tubes filled with the active material capable of supporting thermochemical reactions (107). In the case where the active material is not a perfect absorber of the solar spectrum, inclusions in the form of nanometric particles (for example, plasmonic particles) can be incorporated or an adjacent layer of an absorber material can be added for this purpose. The transparent tubes, in addition to acting as a mechanical support and heat reservoir, consist of an absorber layer for infrared radiation. In this way, the energy stored in the heat trap ends up being absorbed near the active powder whereto it is transmitted by conduction.
4. As in preferred embodiment 1, the device consists of a steam generator (102), a system for admitting pulses (103) and a gas outlet (106) (Fig. 3). In addition, an automatic control system for separating the gases by pulses as shown in Fig. 5.

### EMBODIMENT 3

A preferred embodiment of the present invention of a device for hydrogen production by means of thermochemical water dissociation cycles is described below with the help of the attached figures.
1. The central point of this embodiment of the invention is the receiver (101) and its components for steam generation and admission, radiation collection, heat trap, induction of thermochemical reactions and gas evacuation. Fig. 1 schematically shows a receiver (101) operating with a linear collector (110). The collector may be a parabolic trough or Fresnel collector, not excluding any other linear collectors. Fig. 4 shows in detail the receiver (101), the absorber is composed of the active material inside a porous container (108) disposed on a substrate (105) axially, the gas evacuation system (106), the steam generator (102), and the steam pulse admission system (103).
2. The tubular receiver (101) is delimited by a tube of transparent material in the solar spectrum (109), and the tube (109) is coated with material capable of reflecting the infrared radiation produced by the hot absorbing material thus creating a heat trap.
3. The absorber is located on the axis of the tube, which corresponds to the position of maximum solar concentration. The absorber comprises a substrate (105) whereon the active material is placed within a porous container (108) capable of supporting thermochemical reactions. In the event that the active material (108) is not a perfect absorber of the solar spectrum, inclusions in the form of nanometric particles (for example, plasmonic particles) can be incorporated or an adjacent layer of an absorber material can be added for this purpose. The substrate (105), apart from acting as a mechanical support and heat reservoir, consists of an absorbing layer for infrared radiation. In this way the energy stored in the heat trap ends up being absorbed near the active layer whereto it is transmitted by conduction.
4. As in preferred embodiment 1, the device consists of a steam generator (102), a system for admitting pulses (103) and a gas outlet (106) (Fig. 3). In addition to an automatic control system to separate the gases by pulses as shown in Fig. 5.

### EMBODIMENT 4

A preferred embodiment of the present invention of a device for hydrogen production by means of thermochemical water dissociation cycles is described below with the help of the attached figures.
1. The central point of this embodiment of the invention is the receiver (201) and its components for steam generation and admission, radiation collection, heat trap, induction of thermochemical reactions and gas evacuation. Fig. 6 schematically shows a receiver (201) operating with a parabolic collector (210). The collector may be a parabolic dish collector, not excluding any other parabolic collector. Fig. 6 shows in detail the receiver (201), the absorber is a thin layer of active material (104) disposed on a substrate (105) axially, the gas evacuation system (106), the steam generator (102), and the steam pulse admission system (103).
2. The tubular receiver (201) is delimited by a tube of transparent material in the solar spectrum (109). The tube (109) is coated with material capable of reflecting the infrared radiation produced by the hot absorbing material thus creating a heat trap.
3. The absorber is located in the area that corresponds to the position of maximum solar concentration. The absorber consists of a substrate (105) whereon the active material (104) capable of supporting the thermochemical reactions is deposited. In the event that the active material (104) is not a perfect absorber of the solar spectrum, inclusions in the form of nanometric particles (for example, plasmonic particles) can be incorporated or an adjacent layer of an absorber material can be added for this purpose. The substrate (105), apart from acting as a mechanical support and heat reservoir, consists of an absorbing layer for infrared radiation. In this way the energy stored in the heat trap ends up being absorbed near the active layer whereto it is transmitted by conduction.
4. As in preferred embodiment 1, the device consists of a steam generator (102), a system for admitting pulses (103) and a gas outlet (106) (Fig. 3). In addition to an automatic control system to separate the gases by pulses as shown in Fig. 5.
5. The absorber of this embodiment may be changed by the configuration of the absorber of embodiment 2 or embodiment 3. Where the active material is disposed as a micrometric powder in very thin tubes (107), embodiment 2, or the active material is disposed in a porous container on a substrate (108), embodiment 3.

### INDUSTRIAL APPLICATION

1. It can replace or operate the combination of photovoltaic energy plus electrolysers to generate hydrogen in a complementary manner (depending on the case). In addition, it replaces all alternative ways of generating green hydrogen (photolysis, biological systems, etc.).
2. It can work in a complementary way to photovoltaic energy since hydrogen is an energy vector that allows energy to be stored for use on demand, something that photovoltaic energy cannot do.
3. It allows the use of fuel cells to replace batteries in vehicles, especially in heavy vehicles and over long distances (road).
4. Apart from the possibility of exploiting solar energy through hydrogen generation (particularly useful for road transport), the greatest advantage of the invention is that it can be used for on-site hydrogen generation through a distributed generation paradigm, as opposed to the current centralised energy production paradigm. This is not a minor issue, taking into account that the biggest problem in moving to a hydrogen-based economy has to do with the difficulty of transporting it cheaply and effectively, because it cannot be liquefied at room temperature.

### BRIEF DESCRIPTION OF THE FIGURES

Fig. 1. Scheme of a linear concentration system (100). Case of preferred embodiment 1, with a parabolic trough collector (110) and a tubular receiver (101) with an absorber plate therein.
Fig. 2. Receiver (101) of a linear concentration system according to preferred embodiment 1. It consists of a tube transparent to the solar spectrum (109) that has a layer to reflect the infrared radiation emitted by the hot absorber. The absorbent material consists of a thin layer of active material (104) on a substrate (105). The area of the substrate (105) in contact with the active material effectively absorbs infrared radiation. If the active material does not effectively absorb the solar spectrum, an adjacent layer is disposed for this purpose. The steam generator (102) with its steam inlet (103) is shown in red, and the gas extraction area with its outlet (106) is shown in green.
Fig. 3. Receiver (101) of a linear concentration system according to preferred embodiment 2. It consists of a tube transparent to the solar spectrum (109) that has a layer to reflect the infrared radiation emitted by the hot absorber. The active material is disposed in thin transparent tubes (107). Transparent tubes effectively absorb infrared radiation. If the active material does not effectively absorb the solar spectrum, a layer is disposed on the thin tubes (107) for this purpose. The steam generator (102) with its steam inlet (103) is shown in red, and the gas extraction area with its outlet (106) is shown in green.
Fig. 4. Receiver (101) of a linear concentration system according to preferred embodiment 3. It consists of a tube transparent to the solar spectrum (109) that has a layer to reflect the infrared radiation emitted by the hot absorber. The active material is disposed within a porous container (108) on a substrate 105. The porous container (108) allows the passage of solar and infrared radiation, in addition to the free circulation of gases. The area of the substrate (105) in contact with the active material effectively absorbs infrared radiation. If the active material does not effectively absorb the solar spectrum, an adjacent layer is disposed for this purpose. At one end, the steam generator (102) is shown with its steam inlet (103), and, at the other, the gas extraction area with its outlet (106).
Fig. 5. Diagram of the components and their disposal for the performance of the pulsed process. The solar collector (110, 210) that concentrates the energy on the receiver (101, 102) is identified. The valves are connected to the actuators of the control system to open or close at each pulse, thus separating the hydrogen gas outlet with water (111) and the oxygen outlet (112).
Fig. 6. Scheme of a parabolic concentration system (200). Case of preferred embodiment 4, with a parabolic dish collector (210) and a tubular receiver (201) with an absorber plate therein.

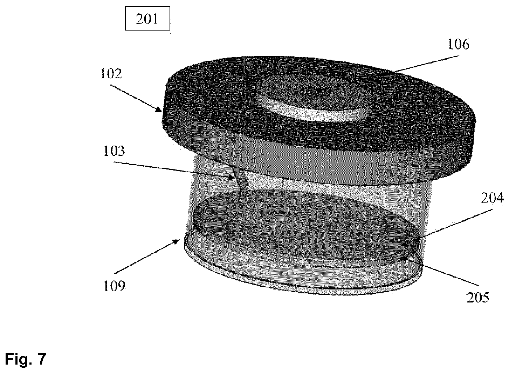

Fig. 7. Receiver (201) of a parabolic concentration system according to preferred embodiment 4. It consists of a tube transparent to the solar spectrum (109) that has a layer to reflect the infrared radiation emitted by the hot absorber. The absorbent material consists of a thin layer of active material (104) on a substrate (105). The area of the substrate (105) in contact with the active material effectively absorbs infrared radiation. If the active material does not effectively absorb the solar spectrum, an adjacent layer is disposed for this purpose. The steam generator (102) with its steam inlet (103) is shown in red, and the gas extraction area with its outlet (106) is shown in green.

### EXAMPLES OF THE INVENTION

Laboratory equipment has been developed to characterise the behaviour of redox active material in the reduction and oxidation half-cycles. We have developed a simulator that takes into account fluid transport, heat absorption and transmission, and the chemical reactivity of the active material using experimental data from our measurements on different materials and those published on ceria, (Bulfin, B. et al. Analytical Model of CeO 2 Oxidation and Reduction. J. Phys. Chem. C 117, 24129-24137 (2013)). The simulator shows that the principles on which the invention is based can be executed using ceria as a model material:
i. The heat trap allows reaching suitable temperatures for the reduction of the ceria. Thus, 1400K can be exceeded under conditions of maximum irradiance (irradiance of 1kW/m² with a concentration of 30 suns).
ii. The characteristic residence time of the gases, oxygen in the reduction step and steam plus hydrogen in the oxidation step, is of the order of 1 second, considering the volume limited by the receiver tube, 10 centimetres in diameter, 1 metre long, a minimum pumping of 6l/h and a maximum pressure of 0.1 bar.
iii. The energy requirements for the vaporiser account for less than 1% of the energy captured by the collector.
iv. During the reduction and oxidation step, the thermochemical model describing the kinetics is not diffusion-limited, having characteristic times of 1 second for a reduction and oxidation of the active material limited to less than 5%.
v. During the oxidation step, the temperature drop of the active material is small, since the radiation term and the exothermic reaction compensates the convection losses for film coefficient values of 10Wm⁻²K⁻¹ and pulses of 1 second. During the cycles, the system finds an equilibrium temperature higher than 1200K that allows the activation of the material.

Ceria has been used as a model material without excluding the use of other active materials with similar or superior properties.

## Claims

1. Method for producing hydrogen by dissociating water through thermochemical reduction-oxidation reactions (redox), **characterised in that**:
a. an active material capable of sustaining redox cycles is used, with hydrogen production in each oxidation half-cycle, wherein said material must be partially reduced in the reduction half-cycle and completely reoxidised in the oxidation half-cycle induced by interaction with steam;
b. hydrogen production is performed continuously in two-step cycles: the first is heating the active material in vacuum to partially reduce it, which results in oxygen emission, and the second step is admitting a steam pulse to oxidise the active material releasing hydrogen;
c. the method is performed in a solar concentration system comprising a collector that focuses solar energy, a receiver where the system is located for the use of concentrated solar energy, and an absorber that transforms solar energy into heat;
d. the active material is kept at high temperature during the reduction and oxidation steps, wherein said material may act as an absorber or be bonded to the absorber to maximise the energy it receives from the absorber by thermal conduction;
e. the energy emitted in the form of infrared radiation within the receiver is confined in the system by a heat trap and is absorbed in an area close to the active material;
f. the steps of each cycle are controlled by a process system that regulates the time of each step by opening and closing the steam inlet and separating the gases evacuated in each step;
g. the oxygen generated in the reduction reaction and the hydrogen generated in the oxidation reaction are evacuated from the reactor before the entry of steam from the next redox cycle;
h. the solar concentrator system comprises a vaporiser.

2. Method for producing hydrogen according to claim 1, wherein the solar concentrator is a linear concentrator with a moderate concentration of up to 50 suns.

3. Method for producing hydrogen according to claim 2, wherein the concentrator is a parabolic trough concentrator or a concentrator based on Fresnel lenses.

4. Method for producing hydrogen according to claim 1, wherein the solar concentrator is a parabolic dish concentrator with a moderate-high concentration greater than 50 suns.

5. Method for producing hydrogen according to any of claims 1 to 4, wherein the active material is disposed in a thin layer adhered to a substrate inside the solar receiver.

6. Method for producing hydrogen according to any of claims 1 to 4, wherein the active material is disposed in the form of micrometric powder inside fine tubes within the solar receiver.

7. Method for producing hydrogen according to any one of claims 1 to 4, wherein the active material is disposed inside a porous container capable of retaining the active material in the form of a micrometric powder.

8. Method for producing hydrogen according to any one of the preceding claims, wherein the heat trap is a layer on the receiver capable of reflecting the infrared radiation emitted by the hot active material and wherein the infrared radiation confined by the heat trap is absorbed in an area close to the active material to facilitate heating of the active material by thermal conduction and minimise yield loss.

9. Method for producing hydrogen according to any of the preceding claims, wherein the vaporiser is part of the receiver and is fed by a small fraction of the solar energy collected by the collector.

10. Device for obtaining hydrogen by the method according to any of the preceding claims, comprising:
a. a solar concentrator composed of a collector (110), a transparent receiver (101) and an absorber;
b. a vaporiser (102) with a steam inlet to the receiver (103);
c. an active material (104) disposed inside the receiver (101);
d. a heat trap that confines the heat within the receiver (101) wherein infrared radiation emitted in the receiver is absorbed in an area close to the active material;
e. a gas outlet (106) controlled by the process control system;
f. a two-way gas evacuation system formed by a gas pump (111) to evacuate the stream of hydrogen and water produced inside the receiver and another gas pump (112) to evacuate the stream of oxygen produced in the receiver;
g. an automatic process control system configured to synchronise the opening and closing of valves for the correct admission of the steam pulses (102) and the correct evacuation of hydrogen and oxygen by means of the pumps (111) and (112).

11. **The** device for producing hydrogen according to claim 10, wherein the solar concentrator is a linear concentrator (100) with a moderate concentration of less than 50 suns and wherein the active material is disposed either as a thin layer, or as a micrometric powder in fine tubes, or within a porous container.

12. **The** device for producing hydrogen according to claim 10, wherein the solar concentrator is a parabolic solar concentrator (200) with a moderate-high concentration greater than 50 suns, and wherein the active material is disposed either as a thin layer, or as a micrometric powder in fine tubes, or inside a porous container.

13. Device for producing hydrogen according to any one of claims 10 to 12, wherein the receiver is coated by a layer (109) capable of reflecting the infrared radiation emitted inside the receiver.

14. Device for producing hydrogen according to any of claims 10 to 13, wherein the vaporiser (102) is part of the receiver and is fed with a small fraction of the solar energy collected by the collector.
